# EUROPEAN PATENT APPLICATION

(11) **EP 4 821 976 A1**
(43) Date of publication of application: **14.10.2026**
(21) Application number: 25169975.7
(22) Date of filing: 11.04.2025
(51) Int. Cl.: C08J 11/28

(54) **PROCESS FOR THE HETEROGENEOUS DEPOLYMERIZATION OF ORGANOPOLYSILOXANES UNDER FLOW CONDITIONS**

(71) Applicant: Henkel AG & Co. KGaA, 40589 Düsseldorf (DE)
(72) Inventor: Geitner, Felix, 40822 Mettmann (DE); Gutacker, Andrea, 40764 Langenfeld (DE); Schafhausen, Niklas, 40627 Düsseldorf (DE); Dunekake, Ralf, 40589 Düsseldorf (DE); Salahudeen, Shamna, 18059 Rostock (DE); Mejia, Esteban, 18059 Rostock (DE)

(57) **Abstract**

The present invention relates to a process for depolymerization of at least one organopolysiloxane in a continuous flow reactor by passing a reaction mixture comprising at least one organopolysiloxane through a reaction chamber under continuous flow conditions, wherein said continuous flow reactor comprises
∘ a reaction chamber;
∘ at least one inlet for said reaction mixture at one end of said reaction chamber; and
∘ at least one outlet for product material at another end of said reaction chamber;
said reaction chamber defines a preferably annular flow passage for said reaction mixture and the reaction product between said inlet and said outlet, said inlet admitting introduction of said reaction mixture into said reaction chamber, said outlet admitting exhausting of reaction product from said reaction chamber,
∘ optionally pumping means for operating on said reaction mixture and/or the reaction product thereof to flow said reaction mixture and/or the reaction product thereof through said reaction chamber from said at least one inlet to said at least outlet,
wherein a catalyst material is provided in the reaction chamber, said catalyst material comprises fluoride and a countercation provided on a support material, wherein said countercation is physically attached to said support material through non-covalent interactions, or chemically attached to the support material through covalent bonds, and said catalyst material is provided in said reaction chamber and contacted with said reaction mixture.

## Description

The invention relates to a process for the heterogeneous depolymerization of organopolysiloxanes under flow conditions, preferably into cyclosiloxanes, which can be used for the preparation of new organopolysiloxanes.

Silicones are a widely used material owing to their unique thermal and mechanical stability as well as low toxicity. However, recycling of silicone waste is a big challenge nowadays, since reuse of generally cured silicones is mostly impossible. Depolymerization of silicone polymers into reusable building blocks would be an attractive option for effective recycling and valorization of siloxane polymer waste. For a circular economy, it would be important to bring back silicone waste into the production chain, at best through chemical recycling methods. Procedures for the chemical recycling of polysiloxanes would allow for recovery of small cyclic polysiloxanes, which could be used for *de-novo* synthesis of silicone materials. Unfortunately, the known methods are energetically inefficient, require high working temperatures, and the use of highly reactive depolymerization reagents, which can hardly be separated from the reaction mixture avoiding their re-use for several depolymerization cycles.

In the publication of Rupasinghe et al., Full Circle Recycling of Polysiloxanes via RoomTemperature Fluoride-Catalyzed Depolymerization to Repolymerizable Cyclics (ACS Applied Polymer Materials, 2021, 3, 1828) silicones were depolymerized into cyclic siloxanes using tetrabutylammonium fluoride (TBAF). In the examples, 100 mg of polyphenylmethylsiloxane having an Mn of ~2,700 g/mol; 0.5 mol% of TBAF; and 10 mL of THF, DCM, acetone, acetonitrile, water, dioxane, toluene, methanol or 2-methyl-THF as a solvent were reacted at room temperature for 24h to yield D^{4Ph} and D^{5Ph}. However, more efficient methods for recycling organopolysiloxanes are desired. Heterogeneous depolymerization of organopolysiloxanes using a catalyst on an inert support is not discussed in this document. In addition, reactions performed under flow conditions are also not described in this reference.

The publication of Torgunrud et al., Entropy-Driven Depolymerization of Poly(dimethylsiloxane). (Macromolecules, 2023, 56, 3668) introduced entropy driven depolymerization of silicones using sub-stoichiometric inorganic bases (10% mol) and an alcohol (1 equivalent) to produce cyclic silicon acetals. The document also describes the use of tetrabutylammonium fluoride. However, more efficient methods for recycling organopolysiloxanes are desired. Heterogeneous depolymerization of organopolysiloxanes using a catalyst on an inert support is not discussed in this document. In addition, reactions performed under flow conditions are also not described in this reference.

The publication of Vu et al., Back-to-cyclic monomers: chemical recycling of silicone waste using a [polydentate ligand-potassium silanolate] complex (Green Chemistry, 2023, 25, 3869) reports silicone depolymerization using a combination of a crown ether and potassium silanolate as nucleophile. The reaction was carried out at 140°C in vacuum. The reaction conditions are very harsh, and the catalyst used for the reactions are very expensive rendering the method both ecologically as well as economically unattractive. Heterogeneous depolymerization of organopolysiloxanes using a catalyst on an inert support is not discussed in this document. In addition, reactions performed under flow conditions are also not described in this reference.

The publication of Alexander et al., Mild depolymerization of silicone grease using aluminum(III)chloride: high-yield synthesis and crystal structure of [{ClSiMe2OAlCl2}2], and its controlled hydrolysis on aluminum surfaces (Appl. Organometal. Chem. 2003; 17: 730-734) teaches that the reaction of AlCl₃ with {Me₂SiO}ₙ (Dow-Corning high-vacuum grease) at an Al : Si ratio of 1 : 1 in hexane at room temperature yielded a large crop of colorless crystals of [{ClSiMe₂OAlCl₂}₂], which were characterized by single-crystal X-ray diffraction and NMR. These crystals were hydrolyzed on an aluminum surface to give a coating of silicone oil interspersed with particles of [Al(OH₂)₆]Cl₃, as determined by powder X-ray diffraction and X-ray photoelectron spectrometry. However, heterogeneous depolymerization of organopolysiloxanes using a catalyst on an inert support is not discussed in this document. In addition, reactions performed under flow conditions are also not described in this reference.

The publication of Gulyukina et al., Catalytic activity of tetrabutylammonium fluoride on different carriers in reactions of fluorene and its derivatives with benzaladehydes M. V. Lomonosov Moscow State University. Translated from Izvestiya Akademii Nauk SSSR, Seriya Khimicheskaya, No. 9, pp. 2053-2058, September, 1986. Original article submitted April 22, 1985 explains that as a function of the nature of the support, tetrabutylammonium fluoride applied on silica gel can be used as a homogeneous catalyst in different reactions catalyzed by the fluoride ion as a base or nucleophilic agent. However, organopolysiloxanes are not mentioned in this context and heterogeneous depolymerization of organopolysiloxanes using a catalyst on an inert support is also not discussed in this document. In addition, reactions performed under flow conditions are also not described in this reference.

The publication of Clark, Drifluor Reagents: Non-Hygroscopic Sources of the Fluoride Ion J.C.S. Chem. Comm., 1978, 789-791, shows that fluorides may be bound to silica gel and other porous solid supports providing non-hygroscopic sources of the fluoride ion which may be used to promote various typically base-assisted reactions. However, organopolysiloxanes are not mentioned in this context and heterogeneous depolymerization of organopolysiloxanes using a catalyst on an inert support is also not discussed in this document. In addition, reactions performed under flow conditions are also not described in this reference.

The publication of Krug et al., Facile Approach to Recycling Highly Cross-Linked Thermoset Silicone Resins under Ambient Conditions ACS Omega 2019, 4, 3782-3789 explains that silicone resins are traditional thermoset polymers with an inorganic backbone, affording chemical inertness and high thermal stability, which also makes them inherently difficult to recycle by traditional methods. Here, it has been demonstrated that catalytic amounts of fluoride ion at room temperature solubilize highly cross-linked silicone resins initially cured up to 250°C. After solubilization equilibria are achieved, solvent is removed to reform the polymer network. Coatings on aluminum substrates and monoliths of virgin and recycled silicone resins were evaluated for hydrophobicity, wear resistance, substrate adhesion, and thermal stability. Silicones recycled under optimized conditions retained nearly 100% wear resistance, thermal stability, and adhesion properties. In some instances, the recycled coatings offered properties superior to the initial materials. However, heterogeneous depolymerization of organopolysiloxanes using a catalyst on an inert support is not discussed in this document. In addition, reactions performed under flow conditions are also not described in this reference.

The publication of Sharma et al., Instability of anhydrous tetra-n-alkylammonium fluorides J. Org. Chem., Vol. 48, No. 12, 1983, 2112-2114 deals with the instability of tetra-n-alkylammonium fluorides. However, organopolysiloxanes are not mentioned in this context and heterogeneous depolymerization of organopolysiloxanes using a catalyst on an inert support is also not discussed in this document. In addition, reactions performed under flow conditions are also not described in this reference.

The publication of Enthaler, Zinc-Catalyzed Depolymerization of End-of-Life Polysiloxanes Angew. Chem. Int. Ed. 2014, 53, 2716 -2721 teaches that polymers occupy an important role in our current society. Besides their great success, an issue is the accumulation of huge amounts of end-of-life polymers. Currently, the waste management is based primarily on landfills, thermal recycling, and downcycling. Notably, only a small portion of end-of-life materials is recycled by depolymerization, which refers to the creation of synthetic precursors that can be polymerized to new polymers to close the cycle. Widely used polymers in modern times are silicones (polysiloxanes), the intrinsic properties of which make their depolymerization demanding; only a few high-temperature or less environmentally friendly processes have been reported. In this regard, an efficient low-temperature protocol for the depolymerization of silicones with benzoyl fluoride in the presence of cheap zinc salts as precatalysts to yield defined products has been established. Notably, the products can be useful synthetic precursors for the preparation of new polymers, so that an overall recycling process is feasible. However, heterogeneous depolymerization of organopolysiloxanes using a catalyst on an inert support is not discussed in this document. In addition, reactions performed under flow conditions are also not described in this reference.

The publication of Warner et al., A robust depolymerization route for Polysiloxanes Chem. Commun., 2024, 60, 1188-1191 explains that a versatile, robust, and stable tetrabutylammonium difluorotriphenylsilicate (TBAT) catalyst has been deployed for efficient depolymerization of silicones. This catalyst is soluble in a variety of organic solvents and is stable up to 170°C, enabling a wide range of reaction conditions under which F⁻-catalysed siloxane bond cleavage can be initiated. This effort is said to offer significant advancement overcoming the traditional limitations of silicone depolymerization, such as high catalyst loading, storage and handling, and few viable reaction media. In the specific set of solvents (cyclohexanone, ethanol, and isopropanol) where only the catalyst was soluble, a heterogeneous reaction was observed with a significant slowdown in the reaction progress. However, heterogeneous depolymerization of organopolysiloxanes using a catalyst on an inert support is not discussed in this document. In addition, reactions performed under flow conditions are also not described in this reference.

Besides, heterogeneous catalysis of processes is also known in the art. Heterogeneous catalysis is catalysis where the phase of catalysts differs from that of the reactants or products. The process contrasts with homogeneous catalysis where the reactants, products and catalyst exist in the same phase. Phase distinguishes between not only solid, liquid, and gas components, but also immiscible mixtures (e.g., oil and water), or anywhere an interface is present. heterogeneous catalysis typically involves solid phase catalysts and gas phase reactants. In this case, there is a cycle of molecular adsorption, reaction, and desorption occurring at the catalyst surface. Thermodynamics, mass transfer, and heat transfer influence the rate (kinetics) of reaction. However, heterogeneous method for depolymerization of polysiloxanes have not been disclosed to date.

Finally, it is also known to carry-out chemical reactions under flow conditions. In flow chemistry, also called reactor engineering, a chemical reaction is run in a continuously flowing stream rather than in batch production. Often, pumps move fluid into a reactor, and where tubes join one another, the fluids contact one another. If these fluids are reactive, a reaction takes place. Flow chemistry is a well-established technique for use at a large scale when manufacturing large quantities of a given material. However, the term has only been coined recently for its application on a laboratory scale by chemists and describes small pilot plants, and lab-scale continuous plants. Often, microreactors are used in that context.

Thus, there is a need for a more effective method for depolymerization of polysiloxanes, silicone oils, adhesive formulations, and end-of-life waste silicone products. Said method should provide components/intermediates/products, which can be reused for the straightforward preparation of organopolysiloxanes. Additionally, the reagents as well as the process should be easy to handle and economically as well as ecologically attractive. Harsh reaction conditions and the use of dangerous, harmful, or hazardous materials should be avoided. Finally, the process should not require any special reactor design or equipment.

Therefore, it was the object of the present invention to provide a more effective method for depolymerization of polysiloxanes, silicone oils, silicone adhesive formulations, and end-of-life waste silicone products, which can overcome the above-discussed drawbacks and disadvantages of reported depolymerization methods.

The present invention has achieved said objectives by providing a process for depolymerization of at least one organopolysiloxane in accordance with claim 1. Preferred embodiments of said process are described in the depending claims.

The present invention describes a process for depolymerization of at least one organopolysiloxane in a continuous flow reactor by passing a reaction mixture comprising at least one organopolysiloxane through a reaction chamber under continuous flow conditions, wherein said continuous flow reactor comprises
∘ a reaction chamber;
∘ at least one inlet for said reaction mixture at one end of said reaction chamber; and
∘ at least one outlet for product material at another end of said reaction chamber; said reaction chamber defines a preferably annular flow passage for said reaction mixture and the reaction product between said inlet and said outlet, said inlet admitting introduction of said reaction mixture into said reaction chamber, said outlet admitting exhausting of reaction product from said reaction chamber,
∘ optionally pumping means for operating on said reaction mixture and/or the reaction product thereof to flow said reaction mixture and/or the reaction product thereof through said reaction chamber from said at least one inlet to said at least outlet,
wherein a catalyst material is provided in the reaction chamber, said catalyst material comprises fluoride and a countercation and is provided on a support material, wherein said countercation is physically attached to said support material through non-covalent interactions, or chemically attached to the support material through covalent bonds, and said catalyst material is provided in said reaction chamber and contacted with said reaction mixture.

The solution of the present invention is advantageous in several aspects:

A very effective method for depolymerization of polysiloxanes, silicone oils, adhesive formulations and end-of-life waste silicone products is provided, which yields components, that can be re-used for the preparation of polysiloxanes in an easy way. The process of the invention can be implemented in a very cheap and easy manner and avoids harsh reaction conditions. Contrary to their unsupported counterparts, supported catalyst comprising fluoride, especially organic ammonium fluoride salts are not hygroscopic, and not corrosive. These features make these catalysts easier to handle than their non-supported analogues. Supported catalyst comprising fluoride are very stable up to 130 °C and can be easily recovered and reused. The products of the process of the claimed invention, especially the cyclic products are quickly separated from the catalyst material at relatively low temperature mostly well below the boiling point of the mixture's components, so repolymerization is avoided at best. In state-of-the-art methods, this separation is done by distillation techniques, which are energy demanding and, since it is done in the presence of the catalyst, may result in loss of the obtained monomers due to thermal repolymerization. The method of the claimed invention is new in the area of silicone depolymerization and operationally simpler than state-of-the-art approaches. In addition, the claimed solution would allow for improved fine-tuning of parameters compared to "standard" homogenous or heterogenous catalysis, if necessary. State-of-the-art catalysts operate in solution, are more expensive, corrosive and difficult to handle, and cannot be easily recovered from the reaction mixture. By performing the reaction under continuous flow condition, the contact time between the catalyst, the starting material and the formed product is shorter than in a conventional stirred batch reactor. So, the repolymerization of the formed products, especially cycles can be successfully avoided at best. In addition, time and energy can be saved from avoiding frequent loading, unloading, and cleaning of the reactor. The continuous nature of the reaction causes low waste generation, significant improvements in mixing and heat management, scalability and energy efficiency and the amount of material produced can be modified by changing the operating time rather than changing the reactor. Generally, the components to be used in the process of the present invention are cheaper than the components to be used in conventional methods; the depolymerization can be carried out at comparatively milder conditions and lower temperatures; the depolymerization of the present invention is operationally simpler than conventional methods. The process of the invention allows for the continuous use of the catalyst material, in particular fluoride salts and can be carried out at very mild temperatures. Since the herein disclosed catalyst is in heterogeneous phase and fixed inside the reactor chamber, it does not have to be separated from the reaction mixture in an additional step, thus the costs associated to the catalysts separation are strongly reduced compared to other state of the art homogeneous or heterogeneous batch processes. Thus, the solution of the present invention has additional cost benefits over conventional depolymerization methods.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements, or method steps. If used, the phrase "consisting of" is closed and excludes all additional elements. Further, the phrase "consisting essentially of excludes additional material elements but allows the inclusion of non-material elements that do not substantially change the nature of the invention.

When amounts, concentrations, dimensions, and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of ±20%, preferably ±10% of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights (Mₙ), unless otherwise stipulated.

As used herein, "polydispersity" refers to a measure of the distribution of molecular mass given in a resin sample. The polydispersity is calculated by dividing the weight average molecular weight (M_{w}) by the number average molecular weight (Mₙ).

As used herein, the term "hydrocarbyl" group refers to univalent group formed by removing a hydrogen atom from a hydrocarbon, e.g., methyl, ethyl, propyl, phenyl.

As used herein, "C₁-C₈ alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C₈ alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and norbornane.

As used herein, a "C₆-C₁₈ aryl" group used alone or as part of a larger moiety - as in "aralkyl group" - refers to optionally substituted, monocyclic, bicyclic, and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C₂₀ alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

As used herein, the term "arylene" group refers to a divalent group that is a radical of an aryl group. Suitable arylene group includes phenylene, furanylene, piperidylene, and naphthylene.

Where mentioned, the expression "contain at least one heteroatom" means that the main chain or side chain of a residue comprises at least one atom that differs from carbon atom and hydrogen. Preferably the term "heteroatom" refers to nitrogen, oxygen, silicon, sulfur, phosphorus, halogens such as chlorine (CI), bromine (Br), fluor (F). Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic, or fused compound containing at least one heteroatom, preferably O, S, N, and/or P, in the ring structure.

As used herein, the term "halogen" refers to fluorine, chlorine, bromine, or iodine and correspondingly the term "halide" denotes fluoride, chloride, bromide, or iodide anions.

As used herein, a process under continuous flow conditions relates to a process run continuously, i.e. that a desired product mixture is continuously taken out from the reactor at the same time as new educt, e.g., organopolysiloxane reactants are fed into the reactor.

According to the present invention, the term "support material" identifies chemically inert, i.e., substances non-reactive under the reaction conditions of the reaction catalyzed by the supported catalyst material, which substance can serve as a substrate and scaffold for the active ingredient, i.e., the catalyst material.

The present invention is further illustrated by the accompanying figures. In Fig. 1, the cumulative yield of cycles and the amount of formed difluorosilane are shown for Example 1. In Fig. 2, the cumulative yield of cycles and the amount of formed difluorosilane are shown for Example 2. In Fig. 3, the cumulative yield of cycles and the amount of formed difluorosilane are shown for Example 3. In Fig. 4, the cumulative yield of cycles and the amount of formed difluorosilane are shown for Example 4. In Fig. 5, the cumulative yield of cycles and the amount of formed difluorosilane are shown for Example 5.

According to a preferred embodiment of the invention, the organopolysiloxane which is depolymerized by the process of the invention has unit formula (I)

(R¹₃₋ₓR²ₓSiO_{1/2})ₐ(R¹_{2-y}R²_{y}SiO_{2/2})_{b}(R¹_{1-z}R²_{z}SiO_{3/2})_{c}(SiO_{4/2})_{d} (I)

wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

Organopolysiloxane polymers generally comprise the monofunctional (M) siloxy units (i.e., the (R¹₃₋ₓR²ₓSiO_{1/2}) siloxy units), difunctional (D) siloxy units (i.e., the (R¹_{2-y}R²_{y}SiO_{2/2}) siloxy units), trifunctional (T) siloxy units (i.e., the (R¹_{1-z}R²_{z}SiO_{3/2}) siloxy units), and quadrifunctional (Q) siloxy units (i.e., the (SiO_{4/2}) siloxy units). Although if the organopolysiloxane polymer includes at least one Q siloxy unit, the organopolysiloxane polymer is considered a silicone polymer by one of skill in the art, rather than a silicone resin, due to the degree of polymerization (DP) in the organopolysiloxane polymer and the molar fraction of Q siloxy units present therein.

The unit formula of the organopolysiloxane polymer is representative of the average formula of the M, D, T and Q siloxy units. For example, the M siloxy units may be independently selected within the formula (R¹₃₋ₓR²ₓSiO_{1/2}), and the D siloxy units may be independently selected within the formula (R¹_{2-y}R²_{y}SiO_{2/2}). The subscripts, or mole fractions of the M, D, T and Q siloxy units in the organopolysiloxane polymer, are collective based on all M siloxy units, all D siloxy units, all T siloxy units, and all Q siloxy units, respectively. By way of example, the organopolysiloxane polymer may include M units corresponding to (R¹₃SiO_{1/2}), (R¹₂R²SiO_{1/2}), (R¹R²₂SiO_{1/2}), and/or (R²₃SiO_{1/2}), depending on whether subscript x is 0, 1, 2 or 3. Similarly, the organopolysiloxane polymer may include D units corresponding to (R¹₂SiO_{2/2}), (R¹R²SiO_{2/2}), and/or (R²₂SiO_{2/2}), depending on whether subscript y is 0, 1 or 2.Finally, the T units may be selected from the group consisting of (R¹₁SiO_{3/2}) and (R²SiO_{3/2}) and a combination thereof.

Each R¹ is independently selected from the group consisting of substituted or unsubstituted hydrocarbyl groups, which may be optionally interrupted by at least one heteroatom, a hydroxy group, hydrogen, and hydrolysable groups. The hydrolysable groups are preferably selected from alkoxy groups, acetate groups, lactate groups, or oximino groups. Each R¹ independently may be linear, branched, cyclic, or combinations thereof. Cyclic hydrocarbyl groups encompass aryl groups as well as saturated or non-conjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e.g., a halogen atom, such as chlorine, fluorine, or bromine) , or a carbon atom within the chain of R¹ may be replaced with an atom other than carbon, i.e., R¹ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, sec-butyl, t-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e.g., halogenated) alkyl group. When R¹ is not an aryl group, each R¹ is typically saturated and not an alkenyl or alkynyl group.

In preferred embodiments, each R¹ may be independently selected from the group consisting of alkyl groups, aryl groups, a hydroxy group, hydrogen, and hydrolysable groups, more preferably, from the group consisting of alkyl groups, aryl groups, a hydroxy group, hydrogen, alkoxy groups, acetate groups, lactate groups, and oximino groups.

In more preferred embodiments, each R¹ is independently selected from the group consisting of alkyl groups, aryl groups, a hydroxy group, hydrogen, acetate groups, and alkoxy groups, more preferably, from the group consisting of methyl, ethyl, n-propyl, isopropyl, n-butyl, sec-butyl, isobutyl, t-butyl, pentyl, hexyl, cyclohexyl, benzyl, phenyl, hydroxy, hydrogen, acetate groups, methoxy group, ethoxy group, n-propoxy group, isopropoxy group, n-butoxy group, isobutoxy group, sec-butoxy group, and t-butoxy group.

In particularly preferred embodiments, each R¹ is independently selected from the group consisting of methyl, ethyl, propyl, isopropyl, benzyl, phenyl, hydroxy, hydrogen, acetate groups, methoxy group, ethoxy group, n-propoxy group, and isopropoxy group.

Each R² is independently selected from aliphatically unsaturated groups, which may alternatively be referred to as ethylenic unsaturation. The ethylenic unsaturation in R² may be terminal. Each R² may be independently selected from the group consisting of an alkenyl group and an alkynyl group. "Alkenyl" means an acyclic, branched or unbranched, monovalent hydrocarbon group having one or more carbon-carbon double bonds. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include vinyl groups, allyl groups, and hexenyl groups. "Alkynyl" means an acyclic, branched or unbranched, monovalent hydrocarbon group having one or more carbon-carbon triple bonds. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include ethynyl, propynyl, and butynyl groups. Various examples of R² include CH₂=CH-, CH₂=CHCH₂-, CH₂=CH(CH₂)₄-, CH₂=C(CH₃)CH₂-H₂C=C(CH₃)-, H₂C=C(CH₃)-, H₂C=C(CH₃)CH₂-H₂C=CHCH₂CH₂-, H₂C=CHCH₂CH₂CH₂-, HC≡C-, HC≡CCH₂-, HC≡CCH(CH₃)-, HC≡CC(CH₃)₂-, and HC≡CC(CH₃)₂CH₂-. Alternatively, each R² may be an alkenyl group. Alternatively, each R² may be independently selected from the group consisting of vinyl, allyl, and hexenyl; alternatively vinyl and hexenyl. Preferably, each R² may be a vinyl group.

According to preferred embodiments, at least one of x, y, and z are 0, more preferably x, y, and z are 0.

The organopolysiloxane polymer may have one Q siloxy unit, per molecule. Alternatively, the organopolysiloxane polymer may have two Q siloxy units, alternatively three Q siloxy units, per molecule.

The organopolysiloxane polymer may have a viscosity at 25°C from greater than 0 mm²/s to less than 2,500,000 mm² /s, alternatively from greater than 0 mm²/s to less than 300,000 mm²/s, alternatively from greater than 0 mm²/s to less than 60,000 mm²/s. Preferably, the organopolysiloxane polymer may have a weight-average molecular weight molecular weight (M_{W}) of from greater than 0 to 400,000 g/mol, alternatively from 1,000 g/mol to 200,000 g/mol, alternatively from 1,500 g/mol to 100,000 g/mol. The viscosity of the organopolysiloxane polymer can be measured by BROOKFIELD viscometer. M_{W} of the organopolysiloxane polymer can be determined via gel permeation chromatography employing a light-scattering detector, a refractive index detector, and a viscosity detector while employing polystyrene standards.

In certain embodiments, one organopolysiloxane polymer is depolymerized. Alternatively, a combination of two or more different organopolysiloxane polymers can be depolymerized.

Methods of preparing organopolysiloxane polymers are known in the art, for example, as described in U.S. Patent Application Publication 2002/0061998 to Cray, et al.

Conventional adhesive formulations comprising at least one organopolysiloxane, preferably at least one organopolysiloxane having unit formula (I), can also be depolymerized but might need a pre-treatment to separate the silicone matrix from the filler. A particularly preferred pretreatment method for preferably pasty sealant is as follows: (1) dissolution or dispersion of the sealant material in THF for preferably at least two hours, preferably at 50°C or higher; (2) separation of any filler and organopolysiloxane, preferably PDMS using centrifugation or pressure filtration. Nonpolar solvents, in particular toluene and/or isopropanol are preferably used alternatively.

The at least one organopolysiloxane is preferably depolymerized in liquid state, preferably neat or in solution.

According to the present invention, said at least one organopolysiloxane is depolymerized using a catalyst material, wherein the catalyst material comprises fluoride. In principle, said catalyst material can be selected freely, especially in view of particular objectives to be met, provided that it comprises fluoride.

According to a preferred embodiment, the catalyst material comprises at least one ammonium salt selected from the group consisting of tetraalkylammonium compounds, more preferably from quaternary ammonium compounds of the type [NY₄]⁺X⁻, wherein Y are the same or different from each other and are alkyl, more preferably methyl, ethyl, propyl, iso-propyl, n-butyl, sec. butyl, tert. butyl, especially n-butyl, or containing aromatic rings, especially aryl, benzyl, and might contain heteroatoms, especially N, O, S, or Si, and X is fluoride. Most preferably the catalyst material comprises tetrabutylammonium fluoride.

According to the present invention, the catalyst material comprises a support material, to heterogeneously catalyze depolymerization of the at least one organopolysiloxane.

Particularly preferred inorganic support materials are selected from the group consisting of activated carbon, alum earth, alumina, argillaceous earth, silica gel, kieselguhr, diatomite, talc, talcum, kaolin, clay and other silicates; more preferably from the group consisting of silica gel, kieselguhr, and silicates, in particular from the group consisting of silica. Particularly preferred organic support materials are selected from the group consisting of organic polymers, more preferably polyolefins, in particular polyisobutylene, polystyrene and their copolymers.

According to another particular preferred embodiment of the invention, the catalyst material comprises quaternary ammonium cation covalently attached to the support material.

According to a preferred variant of the present invention, the process for depolymerization of said at least one organopolysiloxane is carried out in the presence of at least one solvent.

Said solvent can also be selected freely, especially in view of particular objectives to be met. However, at least one solvent is preferably selected from the group consisting of alkanes, alkenes, alkynes, alcohols, benzene, and aromatics optionally with aliphatic and/or aromatic substituents, carboxylic acid esters, ethers, tetra alkyl silane, carbon disulfide, halogenated hydrocarbons and perfluorinated hydrocarbons. At least one solvent is preferably selected from the group consisting of n-pentane, n-hexane, n-heptane, n-octane, cyclopentane, n-nonane, n-decane, n-dodecane, cyclohexane, hex-1-ene, cis/trans decaline, cyclohexene, 1,4-dioxane, carbon tetrachloride, p-xylene, benzene, toluene, styrene, pertetrachloroethene, carbon disulfide, tetraline, thiophene, furane, trichlorethene, diethyl ether, anisol, chloroform, chlorobenzene, aniline, 1,1,1-trichloroethane, triethylene glycol dimethyl ether, tetrahydrofuran, benzo[b]pyridine, dichloromethane, pyridine, acetaldehyde, ethylacetate, acetic acid, tetrahydrofuran, dichloromethane, n-butanol and isopropanol; especially from toluene, tetrahydrofuran and isopropanol.

According to a preferred embodiment of the invention, at least one solvent has a relative dielectric constant (k), measured at 20°C, of within the range of from 1 to 25, more preferably from 2 to 20.

The relative dielectric constant (k) is defined as the ratio of the permittivity of the substance (ε) to the permittivity of free space (ε₀). It can be written as k=ε/ε₀. ε₀=8.854187817 A*s/(V*m). The relative dielectric constant k is a unitless, dimensionless quantity because it is the ratio of two like entities. In the parallel plate method the material under test is placed between two electrodes forming a capacitor and the capacitance are then measured. Using the measured capacitance and the thickness of the sample the relative dielectric constant is determined.

Particularly preferred solvents for the present invention include n-pentane (1.844), n-hexane (1.89), n-heptane (1.942), n-octane (1.962), cyclopentane (1.965), n-nonane (1.972), n-decane (1.991), n-dodecane (2.01), cyclohexane (2.023), hex-1-ene (2.06), cis/trans decaline (2.11), cyclohexene (2.22), 1,4-dioxane (2.24), carbon tetrachloride (2.242), p-xylene (2.269), benzene (2.284), toluene (2.385), styrene (2.431), pertetrachloroethene (2.5), carbon disulfide (2.63), tetraline (2.66), thiophene (2.76), furane (2.95), trichlorethene (3.4), diethyl ether (4.34), anisol (4.5), chloroform (4.806), chlorobenzene (5.641), aniline (7.07), 1,1,1-trichloroethane (7.2), triethylene glycol dimethyl ether (7.5), tetrahydrofuran (7.52), benzo[b]pyridine (8.8), dichloromethane (9.08), pyridine (13.23), acetaldehyde (14.8), ethylacetate (6.0), acetic acid (6.2), tetrahydrofuran (THF) (7.5), dichloromethane (9.1), n-butanol (18), isopropanol (IPA) (18), wherein the relative dielectric constant ε of said solvents, determined at 20°C, is indicated in brackets.

The depolymerization is preferably carried out at a temperature within the range of 0°C to 100 °C, more preferably within the range of 20°C to 60°C.

According to a preferred embodiment of the invention, at least one organopolysiloxane is contacted with said catalyst material within the reactor chamber for a preferred Contact time. The Contact time (CT) is preferably calculated as the mathematical relationship between the molar amount of fluoride ions in the catalyst material fixed inside the reaction chamber and the molar amount of organopolysiloxane monomeric units that pass through the reaction chamber in the unit of time according to the following equation: $CT = \frac{mol {F}_{reaction chamber}^{-}}{\left[\frac{mol \left({R}_{3 - x}^{1}{R}_{x}^{2}{SiO}_{1 / 2}\right) + mol \left({R}_{2 - y}^{1}{R}_{y}^{2}{SiO}_{2 / 2}\right) + mol \left({SiO}_{4 / 2}\right) + mol \left({R}_{1 - z}^{1}{R}_{z}^{2}{SiO}_{3 / 2}\right)}{1 min}\right]}$

Preferably, at least one organopolysiloxane to be depolymerized is a homopolymer or a copolymer and preferably comprises more than 50 wt.-%, more preferably more than 60 wt.%, even more preferably more than 75 wt.%, most preferably more than 90 wt.%, of poly alkyl siloxane-repeating units, more preferably of poly C₁-C₄ alkyl siloxane-repeating units, especially of poly methyl siloxane-repeating units.

Cured organopolysiloxane may also be depolymerized by the method of the present invention.

In performing the depolymerization of said at least one organopolysiloxane, the amounts of the components, especially of the at least one organopolysiloxane, the catalytic material, and optionally the at least one solvent, and the ratios of said components one to another can be chosen freely and adapted to particular goals aimed at. However,
(a) based on the total volume of the reaction mixture, the reaction is preferably carried out in the presence of 20 vol% to 90 vol%, more preferably in the presence of 40 vol% to 80 vol% of at least one solvent; and/or
(b) based on the total weight of the catalyst material, the catalyst material preferably comprises 0.5 wt% to 3.5 wt% of fluoride; and/or
(c) the reaction mixture comprising at least one organopolysiloxane is passed through a reaction chamber comprising said catalyst material at a preferred flow rate of 0.05 mL/min to 2 mL/min, more preferably of 0.1 mL/min to 0.5 mL/min; and/or
(d) the at least one organopolysiloxane is contacted with said catalyst material within the reactor chamber for a preferred contact time, between 0.2 min to 20 min, more preferably between 1 min and 10 min.

Preferably, said at least one organopolysiloxane is depolymerized into a composition comprising at least one cyclic siloxane monomer, preferably selected from the group consisting of hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), more preferably selected from the group consisting of octamethylcyclotetrasiloxane, decamethylcyclopentasiloxane and dodecamethylcyclohexasiloxane, in particular selected from the group consisting of octamethylcyclotetrasiloxane and decamethylcyclopentasilioxane.

On the other hand, the product of the depolymerization reaction of the present invention is preferably characterized by low amounts of fluorosilanes, being rather undesired side products. Especially, the amount of 1,3-difluoro-1,1,3,3-tetramethyldisiloxane in the product is usually lower than 5 wt%, preferably lower than 3 wt%, in particular lower than 1wt%, based on the total weight of all silanes formed. In the best scenario, no fluorosilanes are formed.

The following examples serve to illustrate the invention, but the invention is not limited thereto.

### Examples

### Example 1

10 gram of silicone oil (polydimethylsiloxane, PDMS, trimethylsilyl end group, with a molecular weight of 28,000 g/mol, and viscosity 1,000 cSt or 0.94 Pas) were placed in an oven-dried bottle with a secured tight cap. 50 ml of THF were added and the system was stirred until a homogeneous solution was achieved. For the reactor: before starting the reaction, the reactor was flushed with pure isopropanol for 5 to 15 minutes. The reactor was dried with air. The reactor was then filled at about 95% capacity with solid silica supported tetrabutylammonium fluoride, equal to a total of 1.3 g of catalyst material. The whole system was properly closed and the PDMS substrate solution was flowed/passed through (flow rate 0.1 ml/min). The reaction solution was collected at the end of the reactor in an appropriate vial at different intervals of time. The solvent was evaporated using reduced pressure and the sample was submitted for quantification by¹H, ¹³C and ²⁹Si NMR.

The percentage conversion or yield of cyclic siloxanes were calculated using ²⁹Si NMR based on the starting material present or left over in the system as a standard. The starting material was first integrated and normalized into one. Later the other product peaks were integrated and the yield of the product and starting material was calculated by basic mathematical equation.

From elemental analysis it was confirmed that the catalyst contained 23.61 weight% of Carbon, 3.90 wt% of Hydrogen, 1.38 wt% of Nitrogen, 2.20 weight% of Fluoride and 24.54 Mass% of Silicon. Brunauer-Emmett-Teller (BET) analysis confirmed that the silica support used for the catalyst was microporous silica with surface area 57 m².

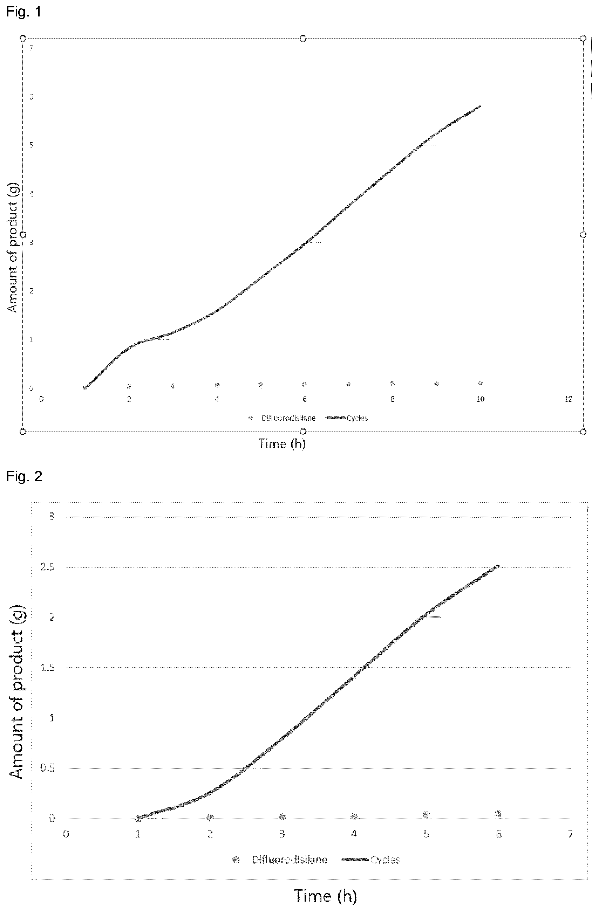

The cumulative yield of cycles (solid line) and the amount of formed difluorosilane (dotted line) are shown in Fig. 1.

### Example 2

10 gram of silicone oil (polydimethylsiloxane, PDMS, trimethylsilyl end group, with a molecular weight of 28,000 g/mol, and viscosity 1,000 cSt or 0.94 Pas) were placed in an oven-dried bottle with a secured tight cap. 50 ml of THF were added and the system was stirred until a homogeneous solution was obtained. For the reactor: before starting the reaction, the reactor was flushed with pure isopropanol for 5 to 15 minutes. The reactor was dried with air. The reactor was then filled at about 95% capacity with solid silica supported tetrabutylammonium fluoride, equal to a total of 1.3 g of catalyst material. The whole system was properly closed and the PDMS substrate solution was flowed/passed through (flow rate of 0.2 ml/min). The reaction solution was collected at the end of the reactor in an appropriate vial at different intervals of time. The solvent was evaporated using reduced pressure and the sample was submitted for quantification by¹H, ¹³C and ²⁹Si NMR.

The percentage conversion or yield of cyclic siloxanes were calculated using ²⁹Si NMR as described in Example 1.

From elemental analysis it was confirmed that the catalyst contained 23.61 wt% of Carbon, 3.90 wt% of Hydrogen, 1.38 wt% of Nitrogen, 2.20 wt% of Fluoride and 24.54 Mass% of Silicon. Brunauer-Emmett-Teller (BET) analysis confirmed that the silica support used for the catalyst was microporous silica with surface area 57 m².

The cumulative yield of cycles (solid line) and the amount of formed difluorosilane (dotted line) are shown in Fig. 2.

### Example 3

55 gram of silicone oil (polydimethylsiloxane, PDMS, trimethylsilyl end group, with a molecular weight of 28,000 g/mol, and viscosity 1,000 cSt or 0.94 Pas) were placed in an oven-dried bottle with a secured tight cap. 300 ml of THF were added and the system was stirred until a homogeneous solution was achieved. For the reactor: before starting the reaction, the reactor was flushed with pure isopropanol for 5 to 15 minutes. The reactor was dried with air. The reactor was then filled at about 95% capacity with solid silica supported tetrabutylammonium fluoride, equal to a total of 1.3 g of catalyst material. The whole system was properly closed and the PDMS substrate solution was flowed/passed through (flow rate of 0.2 ml/min). The reaction solution was collected at the end of the reactor in an appropriate vial at different intervals of time. The solvent was evaporated using reduced pressure and the sample was submitted for quantification by¹H, ¹³C and ²⁹Si NMR.

The percentage conversion or yield of cyclic siloxanes were calculated using ²⁹Si NMR as described in Example 1.

From elemental analysis it was confirmed that the catalyst contained 23.61 wt% of Carbon, 3.90 wt% of Hydrogen, 1.38 wt% of Nitrogen, 2.20 wt% of Fluoride and 24.54 Mass% of Silicon. Brunauer-Emmett-Teller (BET) analysis confirmed that the silica support used for the catalyst was microporous silica with surface area 57 m².

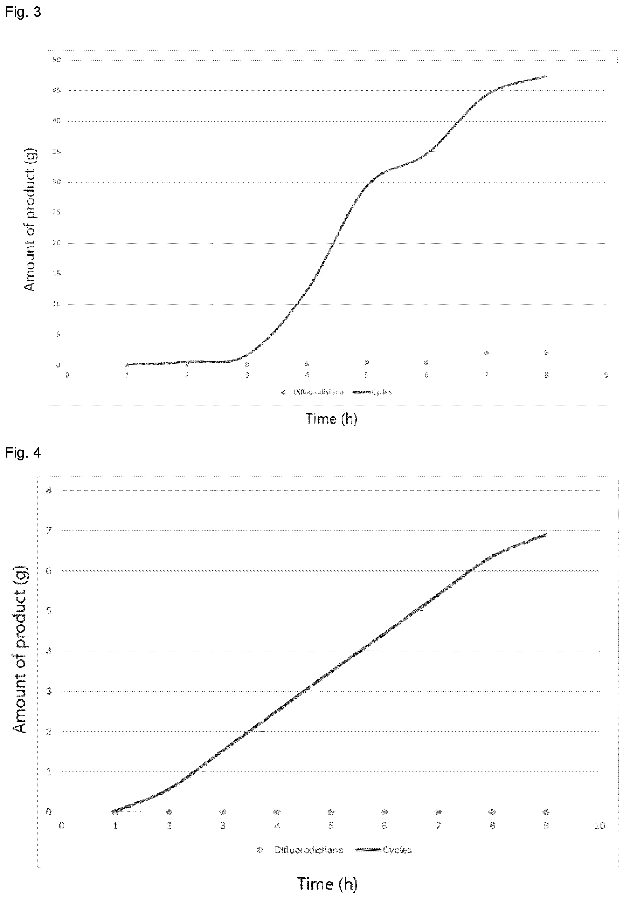

The cumulative yield of cycles (solid line) and the amount of formed difluorosilane (dotted line) are shown in Fig. 3.

### Example 4

### Extraction of PDMS from chalk filled sealant (commercially available as Sista F109)

A 20 g quantity of uncured silicone adhesive formulation containing chalk filler(commercially available as Sista F109) was dissolved in 100 mL of tetrahydrofuran (THF) and subjected to heating at 50-60 °C for a duration of 4-5 hours. The system comprised a higher proportion of filler material and upon heating, the system achieved homogeneity after few minutes. Subsequently, the separation of the filler component was conducted via centrifugation, resulting in the settling of most of the filler upon cessation of stirring. The residual components were removed through centrifugation, leading to an improvement in the appearance of the extract, which exhibited a pale-yellow color. This extract was used for further silicone depolymerization experiments.

To confirm the presence of PDMS, appropriate amount of extract was evaporated using a rotary evaporator. Analysis of the sample via ²⁹Si NMR revealed that the extracted liquid solely consisted of silicone oil.

From elemental analysis it was confirmed that the catalyst contained 23.61 weight% of Carbon, 3.90 weight% of Hydrogen, 1.38 weight% of Nitrogen, 2.20 weight% of Fluoride and 24.54 Mass% of Silicon. Brunauer-Emmett-Teller (BET) analysis confirmed that the silica support used for the catalyst was microporous silica with surface area 57 m².

The extract after centrifugation was directly used for depolymerization. For the reactor: before starting the reaction, the reactor was flushed with pure isopropanol for 5 to 15 minutes. The reactor was dried with air. The reactor was then filled at about 95% capacity with solid silica supported tetrabutylammonium fluoride. The whole system was properly closed and the PDMS substrate solution was flowed through (flow of 0.2 ml per minute). The reaction solution was collected at the end of the reactor in an appropriate vial at different intervals of time. The solvent was evaporated using reduced pressure and the sample was submitted for quantification by¹H, ¹³C and ²⁹Si NMR.

The percentage conversion or yield of cyclic siloxanes were calculated using ²⁹Si NMR as described in Example 1.

The cumulative yield of cycles (solid line) and the amount of formed difluorosilane (dotted line) are shown in Fig. 4.

### Example 5

10 gram of silicone oil (polydimethylsiloxane, PDMS, trimethylsilyl end group, with a molecular weight of 28,000 g/mol, and viscosity 1,000 cSt or 0.94 Pas) were placed in an oven-dried bottle with a secured tight cap. 50 ml of THF were added and the system was stirred until a homogeneous solution was achieved. For the reactor: before starting the reaction, the reactor was flushed with pure isopropanol for 5 to 15 minutes. The reactor was dried with air. The reactor was filled with polymer supported fluoride catalyst (Amberlite^{™} IRA 900 F⁻-form, Fluoride on Amberlyst^{®} A-26, small microporous beads, 20-50 mesh, with 2-3 mmol/g fluoride loading) catalyst about 1 g 95% capacity. The whole system was properly closed and the PDMS substrate solution was flowed/passed through (flow rate of 0.1 ml/min). The reaction solution was collected at the end of the reactor in an appropriate vial at different intervals of time. The solvent was evaporated using reduced pressure and the sample was submitted for quantification by ¹H, ¹³C and ²⁹Si NMR.

The percentage conversion or yield of cyclic siloxanes were calculated using ²⁹Si NMR as described in Example 1.

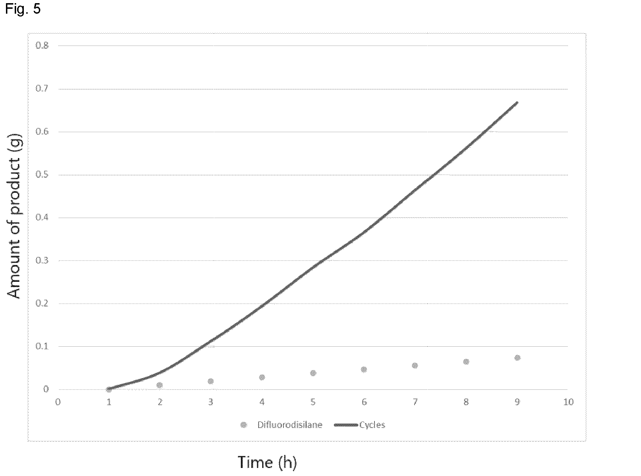

The cumulative yield of cycles (solid line) and the amount of formed difluorosilane (dotted line) are shown in Fig. 5.

## Claims

1. Process for depolymerization of at least one organopolysiloxane in a continuous flow reactor by passing a reaction mixture comprising at least one organopolysiloxane through a reaction chamber under continuous flow conditions, wherein said continuous flow reactor comprises
∘ a reaction chamber;
∘ at least one inlet for said reaction mixture at one end of said reaction chamber; and ∘ at least one outlet for product material at another end of said reaction chamber; said reaction chamber defines a preferably annular flow passage for said reaction mixture and the reaction product between said inlet and said outlet, said inlet admitting introduction of said reaction mixture into said reaction chamber, said outlet admitting exhausting of reaction product from said reaction chamber,
∘ optionally pumping means for operating on said reaction mixture and/or the reaction product thereof to flow said reaction mixture and/or the reaction product thereof through said reaction chamber from said at least one inlet to said at least outlet,
wherein a catalyst material is provided in the reaction chamber, said catalyst material comprises fluoride and a countercation provided on a support material, wherein said countercation is physically attached to said support material through non-covalent interactions, or chemically attached to the support material through covalent bonds, and said catalyst material is provided in said reaction chamber and contacted with said reaction mixture.

2. Process according to claim 1, wherein the at least one organopolysiloxane has unit formula (I)
(R¹₃₋ₓR²ₓSiO_{1/2})ₐ(R¹_{2-y}R²_{y}SiO_{2/2})_{b}(R¹_{1-z}R²_{z}SiO_{3/2})_{c}(SiO_{4/2})_{d} (I)
wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

3. Process according to claim 1 or 2, wherein the catalyst material comprises at least one ammonium salt selected from the group consisting of tetraalkylammonium compounds, preferably from quaternary ammonium compounds of type [NY₄]⁺X⁻, wherein Y are the same or different from each other and are alkyl, more preferably methyl, ethyl, propyl, iso-propyl, n-butyl, sec. butyl, tert. butyl, especially n-butyl, or containing aromatic rings, especially aryl, benzyl, and might contain heteroatoms, especially N, O, S, or Si, and X is fluoride.

4. Process according to at least one of the preceding claims, wherein the catalyst material comprises quaternary ammonium cation covalently attached to the support material.

5. Process according to at least one of the preceding claims, wherein the catalyst material comprises tetrabutylammonium fluoride.

6. Process according to at least one of the preceding claims, wherein the support material is selected from the group consisting of activated carbon, alum earth, alumina, argillaceous earth, silica gel, kieselguhr, diatomite, talc, talcum, kaolin, clay and other silicates; preferably from the group consisting of silica gel, kieselguhr, and silicates, in particular from the group consisting of silica gel.

7. Process according to at least one of claims 1 to 5, wherein the support material is selected from the group consisting of organic polymers, preferably polyolefins, in particular polyisobutylene, polystyrene and their copolymers.

8. Process according to at least one of the preceding claims, wherein the process for depolymerization of said at least one organopolysiloxane is carried out in the presence of at least one solvent.

9. Process according to claim 8, wherein the at least one solvent is selected from the group consisting of alkanes, alkenes, alkynes, alcohols, benzene, and aromatics optionally with aliphatic and/or aromatic substituents, carboxylic acid esters, ethers, tetra alkyl silane, carbon disulfide, halogenated hydrocarbons and perfluorinated hydrocarbons.

10. Process according to claim 8 or 9, wherein the at least one solvent is selected from the group consisting of n-pentane, n-hexane, n-heptane, n-octane, cyclopentane, n-nonane, n-decane, n-dodecane, cyclohexane, hex-1-ene, cis/trans decaline, cyclohexene, 1,4-dioxane, carbon tetrachloride, p-xylene, benzene, toluene, styrene, pertetrachloroethene, carbon disulfide, tetraline, thiophene, furane, trichlorethene, diethyl ether, anisol, chloroform, chlorobenzene, aniline, 1,1,1-trichloroethane, triethylene glycol dimethyl ether, tetrahydrofuran, benzo[b]pyridine, dichloromethane, pyridine, acetaldehyde, ethylacetate, acetic acid, tetrahydrofuran, dichloromethane, n-butanol and isopropanol; especially from toluene, tetrahydrofuran and isopropanol.

11. Process according to at least one of the preceding claims, wherein the depolymerization is carried out at a temperature within the range of 0°C to 100°C, preferably within the range of 20°C to 60 °C.

12. Process according to at least one of the preceding claims, wherein the at least one organopolysiloxane is a homopolymer or a copolymer and preferably comprises more than 50 wt.-%, more preferably more than 60 wt.-%, even more preferably more than 75 wt.-%, most preferably more than 90 wt.-%, of poly alkyl siloxane-repeating units, more preferably of poly C₁-C₄ alkyl siloxane-repeating units, especially of poly methyl siloxane-repeating units.

13. Process according to at least one of the preceding claims, wherein
a) based on the total volume of the reaction mixture, the reaction is carried out in the presence of 20 vol% to 90 vol%, preferably in the presence of 40 vol% to 80 vol% of at least one solvent; and/or
b) based on the total weight of the catalyst material, the catalyst material comprises 0.5 wt% to 3.5 wt% of fluoride; and/or
c) the reaction mixture comprising at least one organopolysiloxane is passed through a reaction chamber comprising said catalyst material at a flow rate of 0.05 mL/min to 2 mL/min, preferably of 0.1mL/min to 0.5 mL/min; and/or
d) the at least one organopolysiloxane is contacted with said catalyst material within the reactor chamber for a contact time, between 0.2 min to 20 min, preferably between 1 min and 10 min.

14. Process according to at least one of the preceding claims, wherein the at least one organopolysiloxane is depolymerized into a composition comprising at least one cyclic siloxane, preferably selected from the group consisting of hexamethylcyclotrisiloxane, octamethylcyclotetrasiloxane, decamethylcyclopentasiloxane and dodecamethylcyclohexasiloxane, more preferably selected from the group consisting of octamethylcyclotetrasiloxane, decamethylcyclopentasiloxane and dodecamethylcyclohexasiloxane, in particular selected from the group consisting of octamethylcyclotetrasiloxane and decamethylcyclopentasilioxane.
